# EUROPEAN PATENT SPECIFICATION

(11) **EP 4 563 329 B1**
(45) Date of publication and mention of the grant of the patent: **01.07.2026**
(21) Application number: 24216094.3
(22) Date of filing: 28.11.2024
(51) Int. Cl.: B29C 70/06

(54) **MULTI-LAYER LAMINATE FOR USE IN NAUTICAL APPLICATIONS AND PROCESS FOR ITS PRODUCTION**
MEHRSCHICHTLAMINAT FÜR DEN EINSATZ IN DER SCHIFFFAHRT UND VERFAHREN ZU SEINER HERSTELLUNG
STRATIFIÉ MULTICOUCHE POUR APPLICATIONS NAUTIQUES ET SON PROCÉDÉ DE PRODUCTION

(30) Priority: 30.11.2023 IT 202300025503
(43) Date of publication of application: 04.06.2025
(73) Proprietor: Guerra, Gaetano, 84127 Salerno (SA) (IT); Bianchi, Riccardo, 80129 Napoli (NA) (IT); D'Amora, Gaetano, 80040 Terzigno (NA) (IT); Genovese, Elia, 80041 Boscoreale (NA) (IT); Nappo, Danilo, 80058 Torre Annunziata (NA) (IT); di Palma, Maria, 80058 Torre Annunziata (NA) (IT)
(72) Inventor: Guerra, Gaetano, 84127 Salerno (SA) (IT); Bianchi, Riccardo, 80129 Napoli (NA) (IT); D'Amora, Gaetano, 80040 Terzigno (NA) (IT); Genovese, Elia, 80041 Boscoreale (NA) (IT); Nappo, Danilo, 80058 Torre Annunziata (NA) (IT); Chini, Antonio, 80058 Torre Annunziata (NA) (IT)
(74) Representative: Zanoli, Enrico

(56) References cited:
- US-A- 5 816 876
- WANG HONGXU ET AL: "Impact behaviour of Dyneema fabric-reinforced composites with different resin matrices", POLYMER TESTING, ELSEVIER, AMSTERDAM, NL, vol. 61, 27 April 2017 (2017-04-27), pages 17 - 26, XP085132775, ISSN: 0142-9418, DOI: 10.1016/J.POLYMERTESTING.2017.04.026
- "Marine Composites - Second Edition", 1 January 1999, ERIC GREENE ASSOCIATES, ISBN: 978-0-9673692-0-7, pages: 1 - 377, XP055337326
- "Guide to composites", 29 November 2009 (2009-11-29), pages 1 - 72, XP055088808, Retrieved from the Internet <URL:http://www.gurit.com/files/documents/Gurit_Guide_to_Composites(1).pdf> [retrieved on 20131118]

## Description

Composite materials are widely used in products for marine environments and inland waters.

A particularly widespread use is in the hulls of boats and all in their components, also non-structural, in floating and semi-floating structures in general and in all their components, also non-structural, where composite materials with matrices, generally thermosetting, reinforced by fibres of various kinds, are above all used.

Products of this type allow a reduction in the weight of watercraft, without altering their characteristics of rigidity and strength.

These products have high performances and hence dominate in the applications described above.

One of the main materials used as reinforcement is currently glass fibre, which is added to the matrices of composite materials in various percentages, according to the intended use of the materials.

However, products based on conventional fibre composites have the main problem of having a microscopic surface roughness greater than that of the non-reinforced matrix.

This characteristic facilitates the formation of fouling by marine and, more generally, aquatic organisms, typical of materials that remain in contact with sea or fresh water at length.

In order to solve this technical problem, or at least attempt to reduce it, it is known to treat products with surface coatings that prevent the formation of this fouling, commonly known as antifouling coatings.

In particular, the products are treated with paints or resins that are spread or sprayed on the surface involved, thereby creating a further layer capable of mitigating the aforesaid problem.

However, these solutions are not permanent and must be repeated numerous times during the technical life of the product in order to prevent the phenomenon from causing permanent damage to the watercraft.

This practice, defined as careening, is onerous and time-consuming, as the boat must be taken out of the water and the antifouling product must be applied uniformly and continuously along the whole of the surface of the boat that may come into contact with the water.

In addition to the problems indicated above, products made of composite materials reinforced by glass fibres pose considerable technical difficulties for the management of their end of life . In fact, there are currently no economically viable processes for recycling these composites.

Moreover, they are not particularly easy to dispose of and even energy recovery in waste-to-energy facilities is difficult and economically unviable due to the large amount of unburned silica residue. US 5 816 876 A discloses a laminate for a surfboard comprising a fibre fabric reinforced matrix comprising among others fibres selected from rayon fibres, polypropylene fibres, polyester fibres and polyamide fibres.

Therefore, in the light of the technical problems illustrated above, it would be desirable to have a multilayer composite material for nautical use that reduces the formation of fouling by aquatic organisms so as to reduce the amount of maintenance and decrease maintenance costs of watercraft.

Moreover, it would also be desirable to have a multilayer composite material which has the high structural characteristics required to produce the hulls of watercraft.

Further, it would be desirable to have a multilayer composite material capable of being easily recycled, so as to reduce the waste material after the end of life of the product made with this material.

Finally, it would be desirable to have a multilayer composite material capable of being disposed of easily, also by means of waste-to-energy facilities, without leaving residues that are toxic for humans or for the environment.

Therefore, the object of the present invention is to provide a multilayer composite material, i.e., a multilayer laminate, for nautical use, capable of reducing the formation of fouling caused by aquatic microorganisms.

One more object of the present invention is to provide a multilayer laminate with high structural characteristics, so that it can be easily used to produce the hulls of watercraft.

Another object of the present invention is to provide a multilayer laminate which can be recycled or disposed of easily and in an environmentally friendly manner without risks for the health of humans or of the environment.

These and other objects are achieved by means of a multilayer laminate for nautical use comprising:
- a plurality of reinforcing layers, consisting of a fabric and of a non-woven fabric arranged in an alternated manner and wherein at least one of the outer layers is composed of non-woven fabric, in an amount from 30% to 60% by weight with respect to the total weight of the multilayer, comprising thermoplastic polymer fibres selected from the group consisting of: polyethylene; isotactic polypropylene; polyamide 6; polyamide 6.6; polyethylene terephthalate; polyacrylonitrile; polyvinyl alcohol;
- at least one reinforcing layer, consisting of a fabric or of a non-woven fabric or of both, in an amount from 30% to 60% by weight with respect to the total weight of the multilayer, comprising thermoplastic polymer fibres selected from the group consisting of: polyethylene; isotactic polypropylene; polyamide 6; polyamide 6.6; polyethylene terephthalate; polyacrylonitrile; polyvinyl alcohol;
wherein, said multilayer laminate has a surface roughness (Rq) measured according to the standard ISO 4287 from 0.04 to 0.25, preferably from 0.08 and 0.18, even more preferably from 0.10 to 0.20.

This provides a sturdy and strong multilayer material, capable of satisfying the structural requirements of the keels of watercraft, which simultaneously reduces the formation of surface fouling caused by marine or aquatic microorganisms in general, in this way reducing maintenance times and costs of watercraft.

According to a preferred embodiment, the layers of fabric and non-woven fabric are from 16 to 20 for each cm of thickness and the layers of non-woven fabric do not exceed 5 layers/cm.

According to a preferred embodiment, the matrix of which the multilayer laminate according to the present invention is composed is selected from unsaturated polyester resins and epoxy resins.

According to a particular aspect of the present invention, the multilayer laminate has a surface roughness less than or equal to that of the unreinforced matrix. This means that the multilayer laminates according to the present invention have a higher performance with respect to known materials, both in terms of reduction of fouling and in structural terms.

According to a preferred embodiment, the reinforcing layer is preferably selected from polyester (PET) and polyvinyl alcohol (PVA) fibres.

According to a preferred embodiment, the matrix is present in an amount from 45% to 55% by weight with respect to the total weight of the multilayer.

In this way, the high structural characteristics of strength and stiffness are maintained, at the same time reducing the weight of the laminate, and consequently reducing the weight of the watercraft.

According to a preferred embodiment, the reinforcing layer is present in an amount from 45% to 55% by weight with respect to the total weight of the multilayer.

In this way, the surface roughness is reduced, reducing the formation of fouling, and the structural characteristics of the laminates are increased.

According to a preferred embodiment, the fabric of which the multilayer laminate according to the present invention is composed has a warp/weft design of the type selected from the group consisting of: canvas; panama; ajourè; reinforced curve; RP canvas; batavia 4AV 4IN reverse; 8x8 honeycomb, Dutch weave only in warp; Dutch weave only in weft; 6 weft broken twill.

In this way the characteristics of stiffness and strength are increased while maintaining the limited weight.

According to a preferred embodiment, the fabric of which the reinforcing layer is composed is thermoset at a temperature from 180 to 200 °C for a time from 1 to 10 minutes.

In this way, the structural characteristics of the laminate are significantly increased while maintaining low weights.

According to a preferred embodiment, at least one of the outer layers of the multilayer laminate according to the invention has no functional finish, i.e., it has no surface layer capable of reducing the roughness of the laminate, which depends solely and exclusively on the characteristics and on the arrangement of the reinforcing fibres, i.e., on the fabric and on the non-woven fabric present in said multilayer.

In this way a laminate is obtained that maintains its particular characteristics over time and is not subject to phenomena of peeling or detachment of the functional coating leading to loss of performance, which in the case of roughness translates into an increase in the formation of surface fouling caused by marine or aquatic microorganisms in general.

According to a preferred embodiment, the reinforcing layer is composed of recycled fibres.

In this way, there is particular attention to and particular respect for the environment and for reuse of the waste material.

A further object of the present invention is to provide a process for the production of a laminate as described above, comprising the following steps:
- providing in a mould a plurality of layers consisting of a fabric and of a non-woven fabric arranged in an alternated manner and wherein at least one of the outer layers is composed of non-woven fabric, wherein said fabric has been previously thermoset at a temperature from 160 to 220 °C for a time from 1 to 10 minutes, preferably at a temperature from 180 to 200 °C for a time from 2 to 5 minutes;
- providing the matrix comprising a thermosetting resin in said mould;
- cross-linking said resin;
- releasing said laminate from the mould.

Preferably, thermosetting of said fabric is implemented by applying to the fabric and to the non-woven fabric a tensile stress from 10 to 20 kg/mm², preferably from 12 to 16 kg/mm², until cooling to room temperature.

In this way, the desired characteristics of the reinforcing layer are maintained, as will be better illustrated below.

Preferably, the fabric is cooled until it reaches a temperature of 20 °C below the glass transition temperature of the thermoplastic polymer of which the fibres of the fabric are composed.

This ensures that thermal stabilization is long lasting and is not affected by any variation in the temperature of the outdoor environment even during the steps to produce the multilayer. Features and advantages of the invention will be explained better in the description of preferred embodiments, illustrated by way of example in the accompanying drawings; wherein:

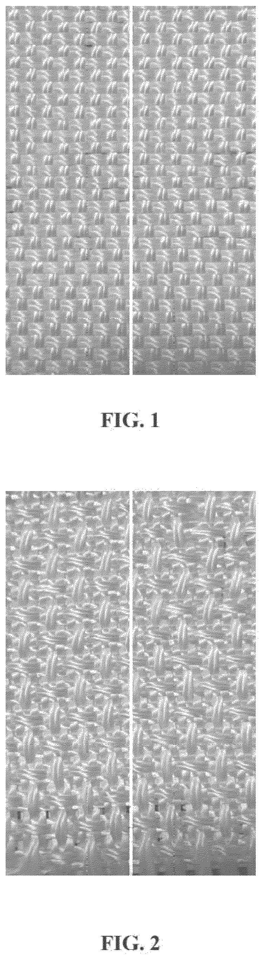

- Fig. 1 illustrates a particular warp/weft weave of a fabric used in a multilayer laminate according to the present invention;
- Fig. 2 illustrates a particular warp/weft weave of a fabric used in a multilayer laminate according to the present invention;

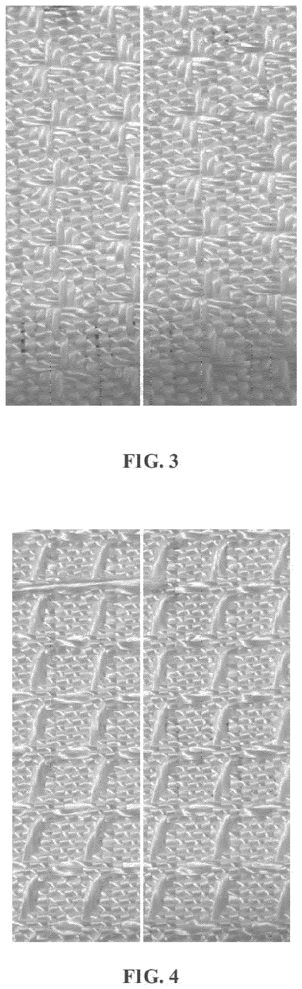

- Fig. 3 illustrates a particular warp/weft weave of a fabric used in a multilayer laminate according to the present invention;
- Fig. 4 illustrates a particular warp/weft weave of a fabric used in a multilayer laminate according to the present invention;

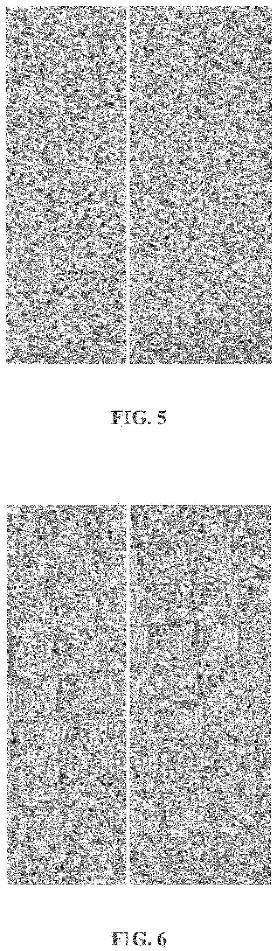

- Fig. 5 illustrates a particular warp/weft weave of a fabric used in a multilayer laminate according to the present invention;
- Fig. 6 illustrates a particular warp/weft weave of a fabric used in a multilayer laminate according to the present invention;

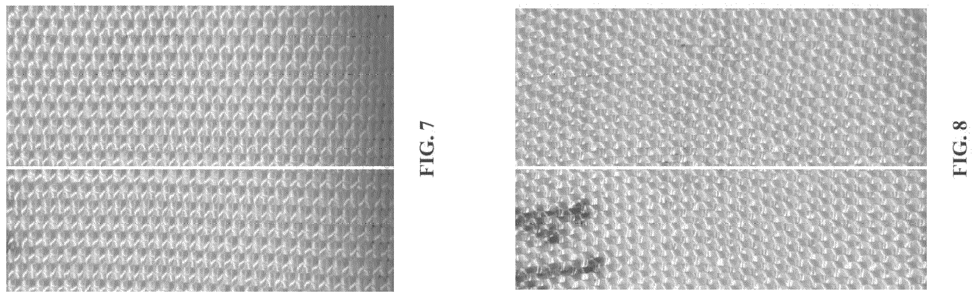

- Fig. 7 illustrates a particular warp/weft weave of a fabric used in a multilayer laminate according to the present invention;
- Fig. 8 illustrates a particular warp/weft weave of a fabric used in a multilayer laminate according to the present invention;
- Fig. 9 illustrates a particular warp/weft weave of a fabric used in a multilayer laminate according to the present invention;
- Fig. 10 illustrates a comparison between the stress-strain curves of the cross-linked pure resin (continuous curves) and the composite material with PET non-woven fabric (dotted curves) according to the present invention;
- Figs. 11A and 11B illustrate a comparison between the thermogravimetric curves of the cross-linked pure resin and of the composite with PET non-woven fabric according to the present invention;
- Fig. 11C illustrates a thermogravimetric curve of a multilayer laminate according to the prior art comprising glass fibres.
- Fig.11D illustrates thermogravimetric curves of the composite with PET non-woven fabric according to the present invention;
- Fig. 12 illustrates a comparison between the stress-strain curves of the composite with PET non-woven fabric (dotted curves) according to the present invention and the corresponding composite with glass fibres (continuous curves);
- Fig. 13 illustrates a comparison between the stress-strain curves of the cross-linked pure resin (continuous curves) and the composite material with PET non-woven fabric according to the present invention (dashed curves);
- Fig. 14 illustrates a comparison between the stress-strain curves of different embodiments of multilayer laminates according to the present invention and laminates without reinforcing fibres;
- Fig. 15 illustrates a comparison between the stress-strain curves of examples 13-17;
- Fig. 16 illustrates a diagram of the production process of a multilayer according to the invention.

The composite materials of the present invention can be obtained using as matrix any one of the thermosetting polymers or thermoplastics, commonly used in composite material technologies.

Examples of thermosetting polymers suitable for this purpose are unsaturated polyester resins; epoxy resins; phenolic resins or alkyd resins. Examples of thermoplastic polymers are both polymers that can only be used at lower temperatures such as isotactic polypropylene or polyamide 6 and polyamide 6.6, and polymers suitable to support higher temperatures such as polyether-ether-ketone (PEEK) or polyether imide (PEI).

The composite materials of the present invention are obtained using as reinforcement fibres based on thermoplastic polymers, rather than inorganic fibres such as glass fibres. For example, fibres based on polyethylene, isotactic polypropylene, polyamide 6, polyamide 6.6, polyethylene terephthalate and polyacrylonitrile can be used.

These fibres based on thermoplastic polymers are preferably obtained from spinning processes that use recycled thermoplastic polymers.

These fibres can be used in the composite production processes both as continuous fibres and as short fibres, both as fabrics and as non-woven fabrics.

For improved adhesion with the matrix, the surface of the fibres based on thermoplastic polymers can also be treated to generate reactive functional groups. These characteristics can, for example, be obtained by atmospheric plasma treatments on fibres, yarns or fabrics.

The composite materials of the present invention can be placed using normal hand lay-up techniques or using vacuum techniques, preferably in conditions of controlled humidity and below 40%. For all the process techniques cited, the cross-linking reactions of the resin can be conducted both at room temperature, using suitable catalysts, and at high temperatures.

The composites of the present invention can contain additives, for example dyes, antioxidants and flame-retardants. Regardless of their function, the additives used within the scope of the present invention are preferably organic and therefore with no solid residue following treatment at high temperatures.

Preferably, the composites of the present invention do not comprise a functional coating layer, i.e., at least one of the outer layers of the multilayer laminate according to the invention has no functional finish. The term functional finish is meant as a layer of material that completely covers the surface of the composite capable of altering its surface characteristics. In particular, the composite according to the invention has no surface treatments that reduce the roughness of the surface. In fact, the low surface roughness of the laminate according to the invention is given solely and exclusively by the nature of the laminate, i.e., thanks to the alternated arrangement of layers of fabric and of non-woven fabric.

The composites of the present invention allow efficient energy recovery at end of life. This is evidenced, for example, by thermogravimetric measurements which show a solid residue, following heating to 600°C, of less than 1% by weight.

The composites of the present invention preferably use chlorine-free thermosetting or thermoplastic resins, to exclude the possibility of organochlorine residues and dioxins forming during energy recovery, also in the case of uncontrolled combustion.

The composites of the present invention also have the advantage of a roughness, evaluated for example according to the standard ISO 4287: 1997, lower than or equal to that evaluated for similar products composed solely of the unreinforced matrix and lower than the roughness of fibreglass products prepared with the same matrix and the same technology. In particular, they have a surface roughness from 0.04 to 0.25, preferably from 0.08 to 0.18.

The lower roughness offers the important advantage of a slower formation of fouling by aquatic organisms. Experimental evidence of this more difficult formation of marine organisms can be evaluated by morpho-colorimetric analysis of the biofouling.

In order to maintain a low roughness while at the same time guaranteeing an excellent or even superior stiffness of the laminate, the fabric and non-woven fabric layers are from 16 to 20 for each cm of thickness and the non-woven fabric layers do not exceed 5 layers/cm.

A preferred embodiment of the present invention provides for the use of fabrics and non-woven fabrics based on polyethylene terephthalate from recycled material, preferably from bottles. This process provides for preliminary drying of the short fibres at 80°C and of the fabrics at higher temperatures, preferably in the range from 160 to 220 °C for a time from 1 minute to 10 minutes, preferably at temperatures from 180 to 200°C for a time from 2 to 5 minutes. Heat treatment is useful and necessary not only to eliminate the residual humidity take-up of the fibrous material but also to stabilize its dimensions (hot shrinkage) in the subsequent curing operations of the thermosetting matrix, in this way avoiding phenomena of slippage thereof in the matrix and/or the creation of stress-cracking of the matrix.

A fundamental aspect of the present invention is the full achievement in each case of the minimum requirements of the standard UNI EN to obtain seaworthiness certification of the watercraft.

As is known, annealing of semicrystalline polymers generates increased crystallinity and, in mono- or bi-oriented products, also a disorientation of the amorphous phase with consequent shrinkage of the product. Moreover, in the examples of the present invention, the strands that form the matrix are already stretched and crystalline, hence highly nucleated, and the degree of crystallization that can be reached during annealing, it can be said, depends essentially on the annealing temperature and practically very little on the annealing time. It is highly presumable that the annealing times of the fabrics used, 1-3 minutes in the industrial thermosetting facilities of the fabrics, were sufficient to reach the relative degree of crystallization at the temperature used.

From Examples 14 and 17, which will be illustrated below, it can be seen that by using strands with different modulus of elasticity (4.8 and 7 cN/Tex) but with the same residual shrinkage at 190°C (15-20%), after annealing at 180°C, fabrics that exhibit the same percentage increase of flexural modulus at of the final composite are obtained.

To limit the phenomenon of total disorientation of the amorphous phase, which would cause a decrease in the tenacity of the fibres, thermosetting was implemented by applying to the fabric a tensile stress from 10 to 20 Kg/mm² , preferably from 12 to 16 Kg/mm², until cooling of the fabric exiting from the furnace at room temperature.

The increase of the flexural modulus observed is of around 30% after annealing the fabric prior to impregnation.

The increase of said modulus is the result of two concurrent factors:
a) hot shrinkage of the fabric caused a greater density of the fabric taking the grammage from 352 g/m² to 458 g/m² (an increase of around 28%);
b) increased crystallinity of the strand forming the fabric from 35% to 45%, which took the tensile strength in both directions from around 3,300 N to around 5,500 N (an increase of around 67%).

This shows how annealing the fabric is a key factor in the production of composites with high flexural modulus, second only to the initial mechanical properties of the thermoplastic fibre used as reinforcement.

According to another aspect of the present invention, the multilayer laminate described above can be produced by means of a moulding process comprising the following steps:
- providing in a mould a plurality of layers consisting of a fabric and of a non-woven fabric arranged in an alternated manner and wherein at least one of the outer layers is composed of non-woven fabric, wherein said fabric has been previously thermoset at a temperature from 160 to 220 °C for a time from 1 to 10 minutes, preferably at a temperature from 180 to 200 °C for a time from 2 to 5 minutes,
- providing the matrix comprising the thermosetting resin in said mould,
- cross-linking said resin,
- releasing said laminate from the mould.

As stated previously, limiting the phenomenon of total disorientation of the amorphous phase, which would cause a decrease in the tenacity of the fibres, thermosetting was implemented by applying to the fabric a tensile stress from 10 to 20 Kg/mm², preferably from 12 to 16 Kg/mm², until cooling of the fabric exiting from the furnace.

Cooling of the fabric takes place gradually until reaching a temperature of 20 °C below the glass transition temperature of the thermoplastic polymer of which the fibres of the fabric are composed.

If the fabric is made with fibres of different polymers, this cooling temperature will be determined by the lowest Tg of the polymer present in the fabric.

According to further aspects, the production process of the laminate according to the invention can take place according to three different methodologies, manual lamination, vacuum or pre-preg (pre-impregnation) processing.
- Manual lamination involves, in this order:
   ∘ applying a release agent to the mould to facilitate release of the object;
   ∘ applying a catalysed pigmented resin, called gel-coat, using a roller or a paint spray gun, which will give the finished product its colour;
   ∘ laying layers of fabric onto which the catalysed resin is applied until reaching the desired number of layers;
   ∘ firstly catalysing the product at room temperature for 24h and then heating it, in a post-cure process, at variable temperatures and durations depending on the nature of the resin used so that the thermal and mechanical properties set;
   ∘ releasing the cooled product;
   ∘ optional: colouring the product.
- The vacuum process involves, in order:
   ∘ the first two steps above;
   ∘ applying the desired layers of fabrics dry;
   ∘ arranging the equipment and consumable material useful for the vacuum process in which the fabrics are placed in a vacuum bag;
   ∘ activating the vacuum process which involves injecting resin into the bag via vacuum pumps;
   ∘ opening the bag after 24h of cross-linking of the resin and applying the post-cure process as per the previous case;
   ∘ releasing the cooled product;
   ∘ optional: colouring the product.
- The process via pre-impregnation involves, in order:
   ∘ preparing the mould by applying special release agents;
   ∘ arranging the pre-preg fabrics in the mould;
   ∘ inserting mould and fabrics into an autoclave and starting the process to heat the system under controlled pressure and atmosphere;
   ∘ releasing the cooled product;
   ∘ optional: colouring the product.

Also in the specific cases described above, the reinforcing fibres or the fabric is firstly thermoset at a temperature from 160 to 200 °C for a time from 1 minute to 10 minutes, preferably applying to the fabric a tensile stress from 10 to 20 Kg/mm² , preferably from 12 to 16 Kg/mm², until cooling of the fabric exiting from the furnace to room temperature.

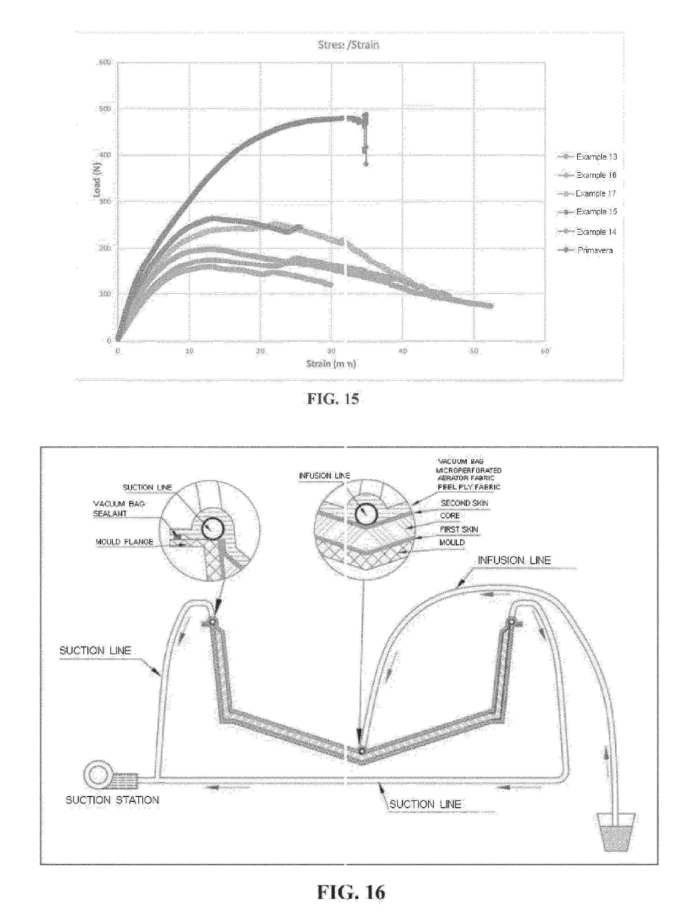

Fig. 16 illustrates a comprehensive diagram of the infusion process for large products that require an additional inner structure called "core".

### EXAMPLES

Some examples are described below for non-limiting illustrative purposes.

Example 1 - A non-woven fabric, based on polyethylene terephthalate from recycled materials, supplied by Freudenberg Politex s.r.l., with apparent density of 150 g/m2, was used. The non-woven fabric was heated to around 180 °C for 6 hours and then processed with the manual lamination (hand lay- up) method, obtaining a product with around 8% by weight of fibre. The resin used for the composite was styrene based orthophthalic unsaturated polyester produced by Waga Paint s.r.l. (Code S110W1). 2% by weight of a peroxide catalyst (methyl ethyl ketone peroxide and hydrogen peroxide), also supplied by Waga Paint s.r.l., was added to this resin.

The product was cross-linked at room temperature at controlled humidity at 40% for around 2 days.

At the end of the curing process, the composite, following the standard UNI EN ISO 527-4, has the mechanical properties indicated in the second line of Table 1.

The mechanical properties of products obtained using the same cross-linked pure resin are indicated in the first line of Table 1.

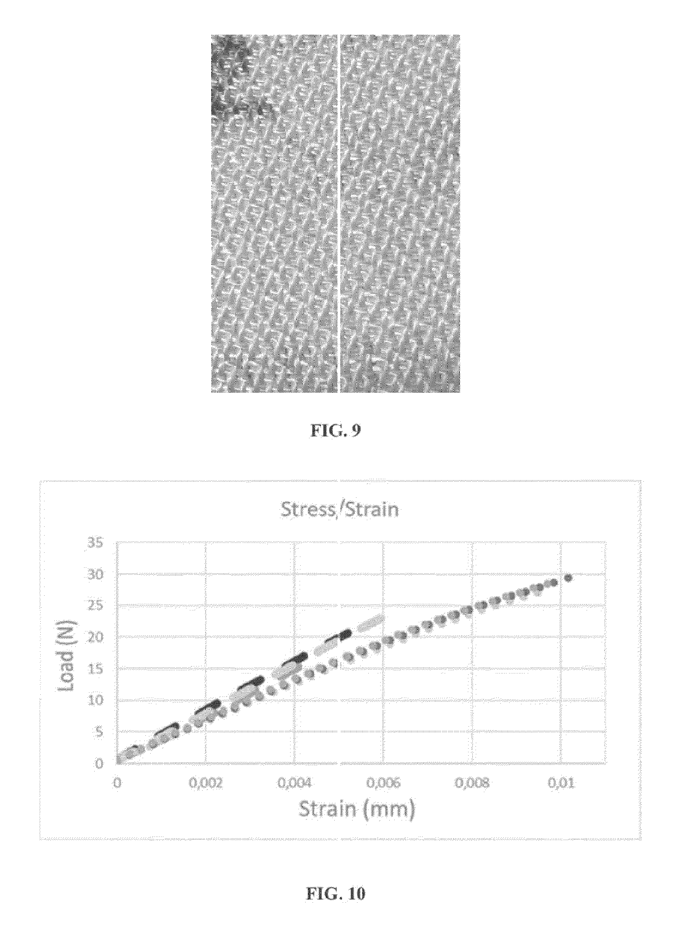

The stress-strain curves of the cross-linked pure resin (continuous curves) and of the composite material with non-woven fabric di PET (dotted curves) are compared in Fig. 10.

The marked increase in the tenacity of the composite compared to the pure resin is evident.

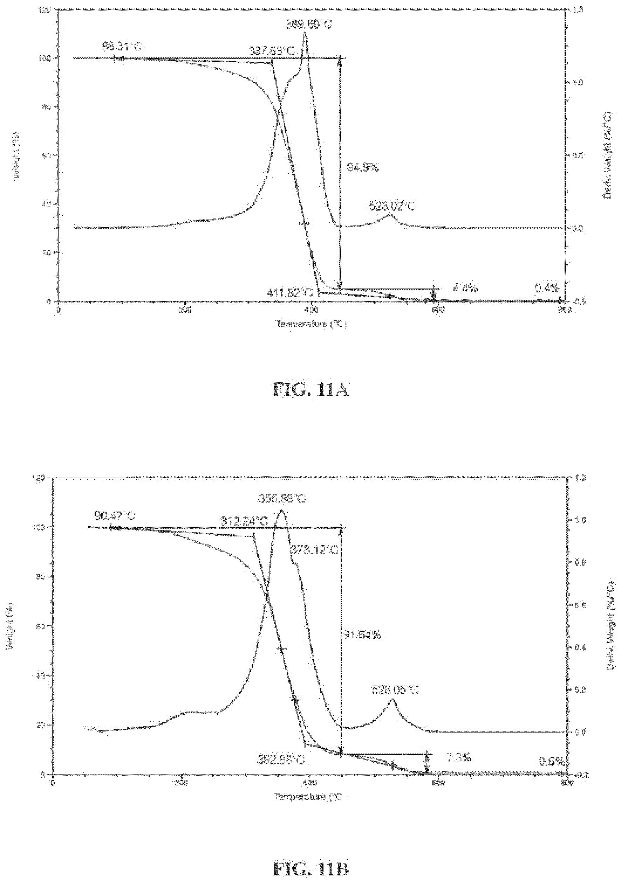

Thermogravimetric curves of the cross-linked pure resin and of the composite with PET non-woven fabric are compared in Figs. 11A and 11B. Comparison shows that both the pure resin and the composite with PET exhibit a residue at temperatures higher than 600°C close to 0.5% by weight.

The roughness of the composite with PET (second line of Table 2) is lower with respect to that observed for the pure resin (first line of Table 2), regardless of the parameter used (Ra, Rq, Rt, Rz, Rc, RSm).

Comparative Example 1 - A non-woven fabric based on glass fibre with apparent density of 450 g/m2 supplied by the company Chimpex Industriale s.p.a. was used.

The non-woven fabric was processed with the manual lamination (hand lay-up) method, obtaining a product with around 7% by weight of fibre. The resin and the process used to prepare the composite were the same used in Example 1.

At the end of the curing process, the composite, following the standard UNI EN ISO 527-4, has the mechanical properties indicated in the third line of Table 1.

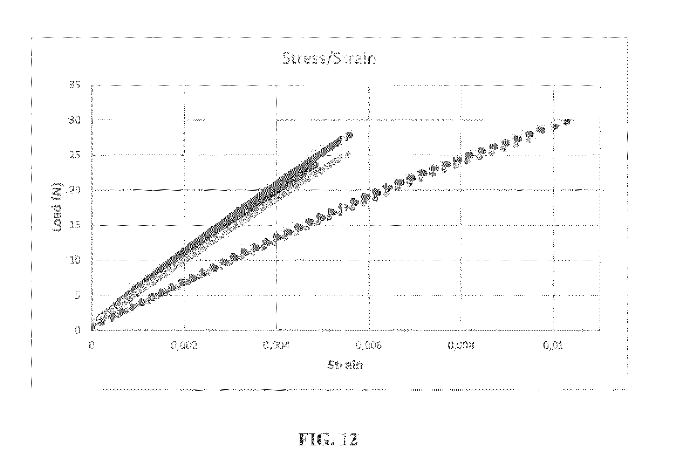

The stress-strain curves of the composite with PET non-woven fabric (dotted curves) and of the corresponding composite with glass fibres (continuous curves) are compared in Fig. 12. The composite with glass fibres has, with respect to the composite with fibre, a modulus of elasticity of around 23% higher but a tenacity of around 53 % lower.

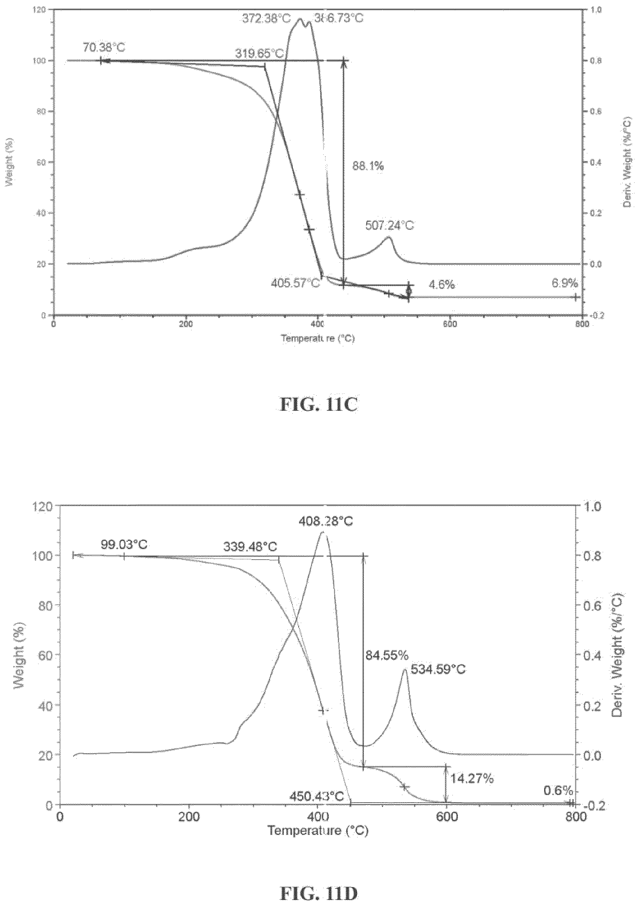

A thermogravimetric curve of the composite with glass fibres (Fig. 11C) shows a residue at temperatures of over 600°C close to 7% by weight, i.e., approximately equal to the amount of fibre used in the composite.

The roughness measurements, indicated in the third line of Table 2, show that the roughness of the composite with glass fibres is markedly high both with respect to the composite with PET (second line of Table 2) and with respect to the product with pure resin (first line of Table 2).

The composites with PET fibre and glass fibre of Example 1 and Comparative Example 1 were also compared, evaluating the action of biofouling. The samples of the two composites were placed in water at two different sites of the harbour in Torre Annunziata (NA): Capitaneria and Molo Ponente, at different depths (-25, -100, -250 cm), in order to simulate the different immersions that can occur in watercraft. After 20 days, the samples immersed in the sites and at the depths indicated above, were recovered and analysed in the laboratory.

Colorimetric analysis of the biofouling that had formed on the samples of composite with recycled PET fibre exhibited lower values than the value known as Chroma, with respect to those of the glass fibres, which indicate colorations closer to white (Table 3). This type of coloration shows that this material has a less dense organic community and a lower presence and stratigraphy of marine organisms. Analysis of the coverage of biofouling indicates that the samples made of recycled PET have a greater percentage of surfaces that are not encrusted by marine organisms with respect to those made of glass fibre (Table 4).

Moreover, the composite with recycled PET fibres exhibited growths in height of the communities that have settled on the surfaces, which are lower with respect to those observed on the composites with glass fibres (Table 5).

Example 2 - A non-woven fabric, based on polyester, in this case recycled polyethylene terephthalate, supplied by Freudenberg Politex s.r.l. with apparent density of 150 g/m2, was used.

The non-woven fabric was heated to around 180 °C for 6h and then processed with the manual lamination (hand lay-up) method, obtaining a product with around 8% by weight of fibre. The resin used for the composite was ENYDYNE H 68380 TA unsaturated polyester, supplied by Polynt s.p.a. 2% by weight of a peroxide catalyst (peroxide methyl ethyl ketone and hydrogen peroxide), supplied by Waga Paint s.r.l., was added to this resin.

The product was cross-linked at room temperature at controlled humidity of 40% for around 2 days. At the end of the curing process the product has, following the standard UNI EN ISO 527-4, the mechanical properties indicated in the first line of Table 6.

The mechanical properties of products obtained using the same cross-linked pure resin are indicated in the second line of the same table.

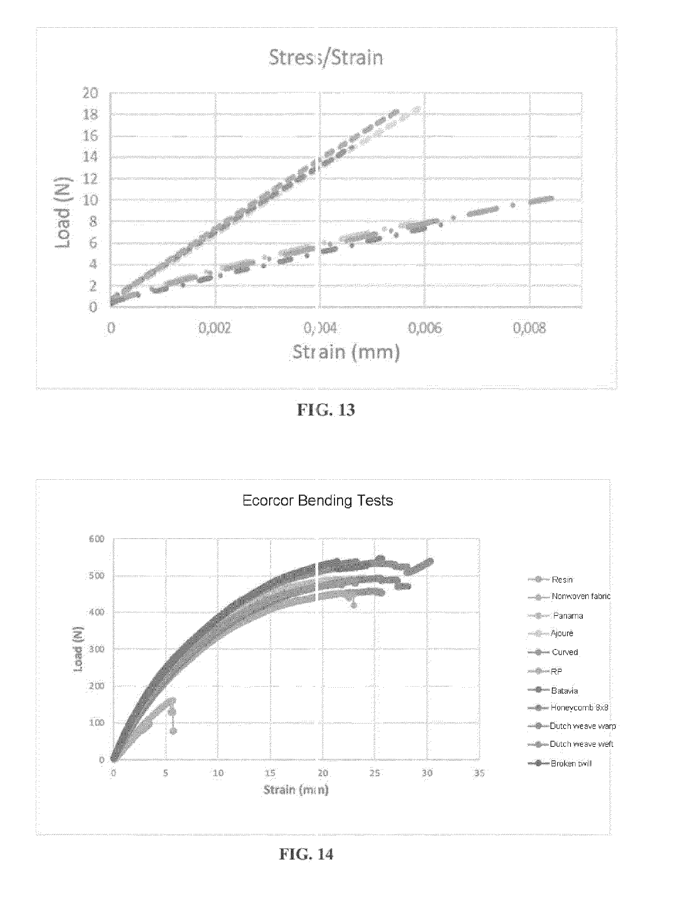

The stress-strain curves of the cross-linked pure resin (continuous curves) and of the composite material with PET non-woven fabric (dashed curves) are compared in Fig. 13.

A marked increase of the modulus of elasticity of the composite with respect to the pure resin is evident.

Thermogravimetric curves of the composite with PET non-woven fabric exhibit a residue at temperatures exceeding 600°C equal to 0.6% by weight (Fig. 11D).

Roughness measurements, indicated in Table 7, show that the roughness of the composite with PET is lower than that observed for the pure resin, regardless of the parameter used (Ra, Rq, Rt, Rz, Rc, RSm).

Example 3 - The specimens were produced through the infusion moulding technique as described above, using as matrix an epoxy resin "Prime 27" by Gurit.

The products produced with the technique described above were subsequently subjected to post-curing processes for 4h at 80°C and then cut and processed for measurement of the mechanical tests according to the standards of reference.

In the present example, a fabric with weft/weave of "Panama" type of 390 g/m² produced from a continuous yarn made of polyvinyl alcohol (PVA) with a count of 2200 dTex was used.

The fibre weight of the final specimen was 49%. The specimens thus produced were analysed according to the standard UNI EN ISO 527-4 giving in particular a modulus of elasticity of 7.9 GPa, a tensile strength of 166 MPa and an elongation at break in the bending test of 5.8%.

The mechanical properties of products obtained using the same cross-linked pure resin are indicated in the first line of Table 8.

The stress-strain curves are compared in Fig. 14. The increase of the modulus of elasticity of the composite with respect to the pure resin, but also with respect to the composite produced with recycled PET non-woven fabric, is evident.

Example 4 - In the present example a fabric with weft/weave of "double Ajourè" type of 390 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 7.8 GPa, a tensile strength of 163 MPa and an elongation at break in the bending test of 5.2%.

The mechanical properties of products obtained using the same cross-linked pure resin are indicated in the second line of Table 8.

The stress-strain curves are compared in Fig. 14. The increase of the modulus of elasticity of the composite with respect to the pure resin, but also with respect to the composite produced with recycled PET non-woven fabric, is evident
Example 5 - In the present example, a fabric with weft/weave of "Reinforced curve" type of 400 g/ m² produced from a continuous yarn made of PVA with a count of 2200 dTex was used. The fibre weight of the final specimen was 49%. The specimens thus produced were analysed according to the standard UNI EN ISO 527-4 giving in particular a modulus of elasticity of 7.6 GPa, a tensile strength of 152 MPa and an elongation at break in the bending test of 5.7%.

The mechanical properties of products obtained using the same cross-linked pure resin are indicated in the third line of Table 8.

The stress-strain curves are compared in Fig. 14. The increase of the modulus of elasticity of the composite with respect to the pure resin, but also with respect to the composite produced with recycled PET non-woven fabric, is evident.

Example 6 - In the present example, a fabric with weft/weave of "RP Canvas" type of 400 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 6.7 GPa, a tensile strength of 134 MPa and an elongation at break in the bending test of 5.1%.

The mechanical properties of products obtained using the same cross-linked pure resin are indicated in the fourth line of Table 8.

The stress-strain curves are compared in Fig. 14. The increase of the modulus of elasticity of the composite with respect to the pure resin, but also with respect to the composite produced with recycled PET non-woven fabric, is evident

Example 7 -In the present example, a fabric with weft/weave of "Batavia 4AV 4IN reverse" type of 405 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 7.9 GPa, a tensile strength of 167 MPa and an elongation at break in the bending test of 5.6%.

The mechanical properties of products obtained using the same cross-linked pure resin are indicated in the fifth line of Table 8.

The stress-strain curves are compared in Fig. 14. The increase of the modulus of elasticity of the composite with respect to the pure resin, but also with respect to the composite produced with recycled PET non-woven fabric, is evident.

Example 8 -In the present example a fabric with weft/weave of "honeycomb 8x8" type of 395 g/m² produced from a continuous yarn made of PVA with a count of 2200 dTex was used. The fibre weight of the final specimen was 49%.

The specimens thus produced were analysed according to the standard UNI EN ISO 527-4 giving in particular a modulus of elasticity of 6.4 GPa, a tensile strength of 132 MPa and an elongation at break in the bending test of 5.5%.

The mechanical properties of products obtained using the same cross-linked pure resin are indicated in the sixth line of Table 8.

The stress-strain curves are compared in Fig. 14. The increase of the modulus of elasticity of the composite with respect to the pure resin, but also with respect to the composite produced with recycled PET non-woven fabric, is evident.

Example 9 - Dutch weave warp fabric. In the present example, a fabric with weft/weave of "Dutch weave only in warp" type of 400 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 6.4 GPa, a tensile strength of 132 MPa and an elongation at break in the bending test of 5.5%.

The mechanical properties of products obtained using the same cross-linked pure resin are indicated in the seventh line of Table 8.

The stress-strain curves are compared in Fig. 14. The increase of the modulus of elasticity of the composite with respect to the pure resin, but also with respect to the composite produced with recycled PET non-woven fabric, is evident.

Example 10 - Dutch weave weft fabric. In the present example, a fabric with weft/weave of "Dutch weave only in weft" type of 405 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 6.4 GPa, a tensile strength of 132 MPa and an elongation at break in the bending test of 5.5%.

The mechanical properties of products obtained using the same cross-linked pure resin are indicated in the eighth line of Table 8.

The stress-strain curves are compared in Fig. 14. The increase of the modulus of elasticity of the composite with respect to the pure resin, but also with respect to the composite produced with recycled PET non-woven fabric, is evident.

Example 11 - Broken twill fabric 12. In the present example, a fabric with weft/weave of "6 weft broken twill" type of 330 g/ m² produced from a continuous yarn made of PVA with a count of 2200 dTex was used.

The fibre weight of the final specimen was 49%. The specimens thus produced were analysed according to the standard UNI EN ISO 527-4 giving in particular a modulus of elasticity of 6.4 GPa, a tensile strength of 132 MPa and an elongation at break in the bending test of 5.5%.

The mechanical properties of products obtained using the same cross-linked pure resin are indicted in the ninth line of Table 8.

The stress-strain curves are compared in Fig. 14. The increase of the modulus of elasticity of the composite with respect to the pure resin, but also with respect to the composite produced with recycled PET non-woven fabric, is evident.

Example 12 - The product "Primavera" was produced using the infusion moulding method, using a flat surface as mould. The materials used were:
- Crystic Vinyl Ester Resin VE 679/03
- Peroxide based catalyst
- Unidirectional PVA/PP fabric Stabilenka^{®} Xtreme 130-25 by Huesker x8
- Non-woven fabric Terbond^{®} 160 by Freudemberg x3
- Non-woven fabric Terbond^{®} 150 by Freudemberg x1
- Non-woven fabric Terbond^{®} 230 by Freudemberg x1
- Release wax for moulds
- Peel ply nylon fabric
- Microperforated aerator fabric
- Vacuum bag
- Vacuum tubes 6/9 mm Ø
- Silicone couplings for pipes 6/9mm Ø for infusion method
- Vacuum sealant mastic

Before being applied, all the fabrics were subjected to a drying cycle in a muffle furnace at 120°C for 4h.

The layers were arranged according to the following criterion:
- 6 unidirectional PVA/PP fabric placed at 0°
- 5 unidirectional PVA/PP fabric placed at 90°
- 4 unidirectional PVA/PP fabric placed at 0°
- 3 unidirectional PVA/PP fabric placed at 90°
- 2 Terbond 160 non-woven fabric
- 1 Terbond 150 non-woven fabric
   0 Terbond 235 non-woven fabric
   1 Terbond 160 non-woven fabric
   2 Terbond 160 non-woven fabric
   3 unidirectional PVA/PP fabric placed at 90°
   4 unidirectional PVA/PP fabric placed at 0°
   5 unidirectional PVA/PP fabric placed at 90°
   6 unidirectional PVA/PP fabric placed at 0°

After 24h of rest following application, the product was removed from the vacuum bag and subjected to the post-curing cycle in a muffle furnace at 110°C for 2h. only after this step was the object cut into specimens and processed according to the standard UNI EN ISO 178:2019 giving in particular a modulus of elasticity of 6.7 GPa, a tensile strength of 121.48 MPa and an elongation at break in the bending test of 7.5%.

The mechanical properties of products obtained using the same cross-linked pure resin are indicated in the first line of Table 9.

The stress-strain curves are compared in Fig. 15. The increase of the modulus of elasticity of the composite with respect to the pure resin, but also with respect to the composite produced with recycled PET non-woven fabric, is evident.

Example 13 - fabric with weft/weave of "Panama" type of 400 g/ m² produced from a high tenacity twisted continuous yarn made of polyethylene terephthalate (PET) with a count of 2000 dTex (Interfil) with 13 insertions.

The fibre weight of the final specimen was 49%. The specimens thus produced were analysed according to the standard UNI EN ISO 527-4 giving in particular a modulus of elasticity of 3.5 GPa, a tensile strength of 75 MPa and an elongation at break in the bending test of 4%.

The mechanical properties of products obtained using the same cross-linked pure resin are indicated in the second line of Table 9 and the stress-strain curves are compared in Fig. 15.

Example 14 - fabric with weft/weave of "Panama" type of 400 g/ m² produced from a high tenacity twisted continuous yarn made of polyethylene terephthalate (PET) with a count of 2000 dTex (Interfil) with 13 insertions. The difference with respect to Example 13 is that the fabric was stabilized in a furnace in air at 180°C for 3 minutes.

The fibre weight of the final specimen was 49%. The specimens thus produced were analysed according to the standard UNI EN ISO 527-4 giving in particular a modulus of elasticity of 4.6 GPa, a tensile strength of 86 MPa and an elongation at break in the bending test of 4.2%.

The mechanical properties of products obtained using the same cross-linked pure resin are indicated in the third line of Table 9 and the stress-strain curves are compared in Fig. 15. As can be noted, thermosetting of the fabric greatly improved the mechanical properties.

Example 15 - fabric with weft/weave of "Panama" type of 400 g/ m² produced from a high tenacity twisted continuous yarn made of polyethylene terephthalate (PET) with a count of 2000 dTex (Interfil) with 13 insertions. The difference with respect to Example 14 is that the fabric was produced using in the weft the polyvinyl alcohol (PVA) yarn used in Examples 3-11.

The fibre weight of the final specimen was 49%. The specimens thus produced were analysed according to the standard UNI EN ISO 527-4 giving in particular a modulus of elasticity of 4.8 GPa, a tensile strength of 102 MPa and an elongation at break in the bending test of 4 %.

The mechanical properties of products obtained using the same cross-linked pure resin are indicated in the fourth line of Table 9 and the stress-strain curves are compared in Fig. 15. As can be noted, the introduction into the fabric, even only in the weft, of the yarn of the same count but made of PVA greatly improved the mechanical properties.

Example 16 - fabric with weft/weave of "Panama" type of 400 g/ m² produced from a continuous yarn made of polyethylene terephthalate (PET) with a count of 2000 dTex coming from recycled PET bottles from post-consumption with 13 insertions.

The fibre weight of the final specimen was 49%. The specimens thus produced were analysed according to the standard UNI EN ISO 527-4 giving in particular a modulus of elasticity of 3.2 GPa, a tensile strength of 78 MPa and an elongation at break in the bending test of 4.9%.

The mechanical properties of products obtained using the same cross-linked pure resin are indicated in the fifth line of Table 9 and the stress-strain curves are compared in Fig. 15. The data are comparable to those obtained from medium tenacity Interfil PET.

Example 17 - fabric with weft/weave of "Panama" type of 400 g/ m² produced from a continuous yarn made of polyethylene terephthalate (PET) with a count of 2000 dTex coming from recycled PET bottles from post-consumption with 13 insertions. The difference with respect to Example 16 is that the fabric was stabilized in a furnace in air at 180°C for 3 minutes. The fibre weight of the final specimen was 49%. The specimens thus produced were analysed according to the standard UNI EN ISO 527-4 giving in particular a modulus of elasticity of 4.3 GPa, a tensile strength of 108 MPa and an elongation at break in the bending test of 7.8 %.

The mechanical properties of products obtained using the same cross-linked pure resin are indicated in the sixth line of Table 9 and the stress-strain curves are compared in Fig. 15. As can be noted, thermosetting of the fabric greatly improved the mechanical properties also with this type of PET.

The tables mentioned in the text above, to which the examples refer, are provided below.

Table 1 illustrates the mean values of the tensile mechanical properties of the S110W1 pure resin products and of the composites with 8% by weight PET fibres and with 7% by weight glass fibres.

Table 2 illustrates the mean values of roughness and relative standard deviation measured for products made of S110W1 pure resin and on composites with 8% by weight PET fibres and with 7% by weight glass fibres.

Table 3 illustrates the mean colorimetric (Chroma) values of the composites with 8% by weight recycled PET fibres and with 7% by weight glass fibres, immersed at the Capitaneria and Molo Ponente sites, at different depths, according to the European standard CIE-Lab with relative standard deviation.

Table 4 illustrates the mean values (%), for absence of coverage by communities of organisms on the composites with recycled PET and with glass fibres, with relative standard deviation.

Table 5 illustrates the mean values of the thicknesses (µm) of the communities that settled on the composites with recycled PET and with glass fibres, with relative standard deviation.

Table 6 illustrates the mean values of the tensile mechanical properties of the composites with 8% PET fibres and products made of ENYDYNE H 68380 TA pure resin.

Table 7 illustrates the mean values of roughness and relative standard deviation measured of composites with 8% PET fibres and products made of ENYDYNE H 68380 TA pure resin.

**Table 1. Mean values of the tensile mechanical properties of the S110W1 pure resin products and of the composites with 8% by weight PET fibres and with 7% by weight glass fibres.**

| **Fibre** | **σ_{B} (MPa)** | **Et (MPa)** | **Tenacity (10⁶ J/m³)** | **Extension (%)** |
|---|---|---|---|---|
| None | 21.17±4.22 | 3797±62 | 0.061±0.023 | 4.55±1.17 |
| Recycled PET | 28.77±1.18 | 3122±83 | 0.155±0.013 | 8.79±0.34 |
| Glass | 24.88±2.29 | 4677±199 | 0.072±0.012 | 5.48±0.45 |

**Table 2. Mean values of roughness and relative standard deviation measured for products made of S110W1 pure resin and on composites with 8% by weight PET fibres and with 7% by weight glass fibres.**

| **Fibre** | *Ra* | *Rq* | *Rt* | *Rz* | *Rc* | *RSm* |
|---|---|---|---|---|---|---|
| None | 1.06±0.17 | 1.27±0.19 | 6.34±0.99 | 4.75±0.52 | 3.07±0.79 | 105.4±24.36 |
| Recycled PET | 0.83±0.11 | 1.00±0.15 | 5.22±0.88 | 3.89±0.63 | 2.47±0.59 | 97.40±22.90 |
| Glass | 1.03±0.30 | 1.26±0.35 | 6.34±2.16 | 4.56±1.49 | 3.06±1.01 | 119.8±19.92 |

**Table 3. Mean colorimetric (Chroma) values of the composites with 8% by weight recycled PET fibres and with 7% by weight glass fibres, immersed at the Capitaneria and Ponente sites, at different depths, according to the European standard CIE-Lab with relative standard deviation.**

| **Depth (cm)** | **PET fibre** | **Glass fibre** |
|---|---|---|
| Capitaneria Site | | |
| -25 | **14.22**±1.53 | **14.74**±1.48 |
| -100 | **12.55**±1.57 | **14.77**±2.88 |
| -250 | **11.99**±4.62 | **17.21**±1.25 |

| Molo Ponente Site | | |
|---|---|---|
| -25 | **9.28**±1.59 | **13.31**±4.06 |
| -100 | **9.04**±2.57 | **10.87**±2.58 |
| -250 | **12.62**±3.73 | **14.40**±2.71 |

**Table 4. Mean values (%), for the absence of coverage by communities of organisms on the composites with recycled PET and with glass fibres, with relative standard deviation.**

| **Depth (cm)** | **Recycled PET** | **Glass fibre** |
|---|---|---|
| Capitaneria Site | | |
| -25 | **0.83**±0.56 | **0.71**±0.43 |
| -100 | **1.29**±0.83 | **0.60**±0.47 |
| -250 | **13.45**±6.24 | **0.23**±0.14 |

| Molo Ponente Site | | |
|---|---|---|
| -25 | **10.44**±2.30 | **2.75**±1.76 |
| -100 | **6.73**±4.67 | **0.00**±0.01 |
| -250 | **7.57**±3.83 | **0.01**±0.00 |

**Table 5. Mean values of the thicknesses (µm) of the communities settled on the composites with recycled PET and with glass fibres, with relative standard deviation.**

| **Depth (cm)** | **Recycled PET** | **Glass fibre** |
|---|---|---|
| Capitaneria Site | | |
| -25 | **0.36**±0.27 | **0.57**±0.36 |
| -100 | **0.24**±0.13 | **0.28**±0.15 |
| -250 | **2.12**±1.21 | **3.05**±1.04 |

| Molo Ponente Site | | |
|---|---|---|
| -25 | **0.63**±0.40 | **1.08**±0.56 |
| -100 | **1.59**±0.56 | **1.88**±0.90 |
| -250 | **2.12**±0.90 | **3.05**±1.54 |

**Table 6. Mean values of the tensile mechanical properties of composites with 8% of PET fibres and products made of ENYDYNE H 68380 TA pure resin.**

| **Fibre** | **σ_{B} (MPa)** | **Et (MPa)** | **Tenacity (10⁶ J/m³)** | **Extension (%)** |
|---|---|---|---|---|
| Recycled PET | 18.11±0.63 | 3470±59 | 0.051±0.003 | 4.8±0.49 |
| None | 8.67±1.34 | 1479±130 | 0.030±0.008 | 5.6±0.55 |

**Table 7. Mean values of roughness and relative standard deviation measured of composites with 8% PET fibres and products made of ENYDYNE H 68380 TA pure resin.**

| **Fibre** | ***Ra*** | ***Rq*** | ***Rt*** | ***Rz*** | ***Rc*** | ***RSm*** |
|---|---|---|---|---|---|---|
| Recycled PET | 0.90±0.12 | 1.08±0.16 | 5.31±0.89 | 4.16±0.67 | 2.69±0.64 | 106±24.92 |
| none | 1.15±0.16 | 1.37±0.19 | 6.45±0.86 | 5.08±0.68 | 3.35±0.91 | 114±21.71 |

**Table 8. Mean values of the tensile mechanical properties of the products of examples 3÷11 with fabrics made of PVA**

| **Fabric** | **σ_{B} (MPa)** | **Et (MPa)** | **Extension (%)** |
|---|---|---|---|
| Panama | 166 | 7900 | 5.8 |
| Ajourè | 163 | 7800 | 5.2 |
| Curve | 152 | 7600 | 5.7 |
| Canvas | 134 | 6700 | 5.1 |
| Batavia | 167 | 7900 | 5.6 |
| Honeycomb | 132 | 6400 | 5.5 |
| Dutch weave warp | 132 | 6400 | 5.5 |
| Dutch weave weft | 132 | 6400 | 5.5 |
| Broken twill | 132 | 6400 | 5.5 |

**Table 9. Mean values of the tensile mechanical properties of the products of Examples 12÷17 with fabrics made from PET RPET and PET/PVA**

| **Fabric** | **σ_{B} (MPa)** | **Et (MPa)** | **Extension (%)** |
|---|---|---|---|
| Primavera | 121,5 | 6700 | 7.5 |
| Panama PET | 75 | 3500 | 4 |
| Panama PET stab. | 86 | 4600 | 4.2 |
| Panama PET/PVA | 102 | 4800 | 4 |
| Panama RPET | 78 | 3200 | 4.9 |
| Panama RPET stab. | 108 | 4300 | 7.8 |

## Claims

1. Multilayer laminate for nautical use comprising:
- at least one matrix in an amount from 40% to 70% by weight with respect to the total weight of the multilayer, comprising a thermosetting polymer selected from the group consisting of: unsaturated polyester resins; epoxy resins; phenolic resins; alkyd resins; or a thermoplastic polymer selected from the group consisting of: isotactic polypropylene; polyamide 6; polyamide 6.6; polyether-ether-ketone or PEEK; polyether imide or PEI;
- a plurality of reinforcing layers, consisting of a fabric and of a non-woven fabric arranged in an alternated manner and wherein at least one of the outer layers is composed of non-woven fabric, in an amount from 30% to 60% by weight with respect to the total weight of the multilayer, comprising thermoplastic polymer fibres selected from the group consisting of: polyethylene; isotactic polypropylene; polyamide 6; polyamide 6.6; polyethylene terephthalate; polyacrylonitrile; polyvinyl alcohol;
wherein said multilayer laminate has a surface roughness (Rq) measured according to the standard ISO 4287 : 1997 from 0.04 to 0.25.

2. Multilayer laminate according to claim 1, wherein said fabric and non-woven fabric layers are from 16 to 20 for each cm of thickness and wherein the layers of non-woven fabric do not exceed 5 layers/cm.

3. Multilayer laminate according to one or more of the preceding claims wherein the surface roughness (Rq) calculated according to the standard ISO 4287 : 1997 is preferably from 0.08 to 0.18.

4. Multilayer laminate according to one or more of the preceding claims, wherein said matrix is preferably selected from unsaturated polyester resins and epoxy resins.

5. Multilayer laminate according to one or more of the preceding claims, wherein said reinforcing layer is preferably selected from polyester or PET and polyvinyl alcohol or PVA fibres.

6. Multilayer laminate according to one or more of the preceding claims, wherein said matrix is preferably present in an amount from 45% to 55% by weight with respect to the total weight of the multilayer.

7. Multilayer laminate according to one or more of the preceding claims, wherein the reinforcing layer is present preferably in an amount from 45% to 55% by weight with respect to the total weight of the multilayer.

8. Multilayer laminate according to claim 1, wherein said fabric has a warp/weft design of the type selected in the group consisting of: panama; ajourè; reinforced curve; RP canvas; batavia 4AV 4IN reverse; 8x8 honeycomb; Dutch weave only in warp; Dutch weave only in weft; 6 weft broken twill.

9. Multilayer laminate according to one or more of the preceding claims, wherein said reinforcing layer is composed of recycled fibres.

10. Multilayer laminate according to claim 1, wherein said fabric of which the reinforcing layer is composed is thermoset at a temperature from 160 to 220 °C for a time from 1 to 10 minutes, preferably at a temperature from 180 to 200 °C for a time from 2 to 5 minutes.

11. Multilayer laminate according to claim 1, wherein at least one of said outer layers has no functional finish.

12. Process for the production of a multilayer laminate according to claim 1, **characterized by** comprising the following steps:
- providing in a mould a plurality of layers consisting of a fabric and of a non-woven fabric arranged in an alternated manner and wherein at least one of the outer layers is composed of non-woven fabric, wherein said fabric has been previously thermoset at a temperature from 160 to 220 °C for a time from 1 to 10 minutes, preferably at a temperature from 180 to 200 °C for a time from 2 to 5 minutes,
- providing a matrix comprising a thermosetting resin in said mould,
- cross-linking said resin,
- releasing said laminate from the mould.

13. Process for the production of a multilayer laminate according to the preceding claim, wherein thermosetting of said fabric was implemented by applying to the fabric a tensile stress from 10 to 20 kg/mm², preferably from 12 to 16 kg/mm².

14. Process for the production of a multilayer laminate according to one or more of claims 12 or 13, wherein said fabric is cooled until it reaches a temperature of 20 °C below the glass transition temperature of the thermoplastic polymer of which the fibres of the fabric are composed.

## Patentansprüche

1. Mehrschichtiges Laminat zur nautischen Verwendung, umfassend:
- wenigstens eine Matrix in einer Menge von 40 Gew.-% bis 70 Gew.-%, bezogen auf das Gesamtgewicht der Mehrfachschicht, umfassend ein duroplastisches Polymer ausgewählt aus der Gruppe bestehend aus: ungesättigten Polyesterharzen; Epoxidharzen; Phenolharzen; Alkydharzen; oder ein thermoplastisches Polymer ausgewählt aus der Gruppe bestehend aus: isotaktischem Polypropylen; Polyamid 6; Polyamid 6.6; Polyetheretherketon oder PEEK; Polyetherimid oder PEI;
- eine Vielzahl von Verstärkungsschichten bestehend aus einem Gewebe und einem Vlies, die auf eine abwechselnde Weise angeordnet sind, und wobei wenigstens eine der Außenschichten aus Vlies besteht, in einer Menge von 30 Gew.-% bis 60 Gew.-%, bezogen auf das Gesamtgewicht der Mehrfachschicht, umfassend thermoplastische Polymerfasern ausgewählt aus der Gruppe bestehend aus: Polyethylen; isotaktisches Polypropylen; Polyamid 6; Polyamid 6.6; Polyethylenterephthalat; Polyacrylnitril; Polyvinylalkohol;
wobei das mehrschichtige Laminat eine Oberflächenrauigkeit (RQ), gemessen nach der Norm ISO 4287: 1997, von 0,04 bis 0,25 aufweist.

2. Mehrschichtiges Laminat nach Anspruch 1, wobei die Lagen von Gewebe und Vliesstoff 16 bis 20 für jeden cm Dicke sind und wobei die Vliesstofflagen 5 Lagen/cm nicht übersteigen.

3. Mehrschichtiges Laminat nach einem oder mehreren der vorstehenden Ansprüche, wobei die Oberflächenrauigkeit (RQ), berechnet nach der Norm ISO 4287: 1997, vorzugsweise von 0,08 bis 0,18 beträgt.

4. Mehrschichtiges Laminat nach einem oder mehreren der vorstehenden Ansprüche, wobei die Matrix vorzugsweise ausgewählt ist aus ungesättigten Polyesterharzen und Epoxidharzen.

5. Mehrschichtiges Laminat nach einem oder mehreren der vorstehenden Ansprüche, wobei die Verstärkungsschicht vorzugsweise ausgewählt ist aus Polyester- oder PET- und Polyvinylalkohol- oder PVA-Fasern.

6. Mehrschichtiges Laminat nach einem oder mehreren der vorstehenden Ansprüche, wobei die Matrix vorzugsweise in einer Menge von 45 Gew.-% bis 55 Gew.-%, bezogen auf das Gesamtgewicht der Mehrfachschicht, vorliegt.

7. Mehrschichtiges Laminat nach einem oder mehreren der vorstehenden Ansprüche, wobei die Verstärkungsschicht vorzugsweise in einer Menge von 45 Gew.-% bis 55 Gew.-%, bezogen auf das Gesamtgewicht der Mehrfachschicht, vorliegt.

8. Mehrschichtiges Laminat nach Anspruch 1, wobei das Gewebe einen Kett-/Schussfaden-Aufbau von dem Typ ausgewählt aus der Gruppe bestehend aus: Panama; Ajourè; verstärkte Kurve; RP-Leinwand; Batavia 4AV 4IN Reverse; 8x8 Wabenstruktur; niederländisches Gewebe nur in Kettfäden; niederländisches Gewebe nur in Schussfäden; 6 Weft-Broken-Twill aufweist.

9. Mehrschichtiges Laminat nach einem oder mehreren der vorstehenden Ansprüche, wobei die Verstärkungsschicht aus recycelten Fasern besteht.

10. Mehrschichtiges Laminat nach Anspruch 1, wobei das Gewebe, aus dem die Verstärkungsschicht besteht, bei einer Temperatur von 160 bis 220 °C für eine Zeit von 1 bis 10 Minuten wärmehärtend ist, vorzugsweise bei einer Temperatur von 180 bis 200 °C für eine Zeit von 2 bis 5 Minuten.

11. Mehrschichtiges Laminat nach Anspruch 1, wobei wenigstens eine der Außenschichten keine funktionelle Oberfläche aufweist.

12. Verfahren zur Herstellung eines mehrschichtigen Laminats nach Anspruch 1, **gekennzeichnet durch** Umfassen der folgenden Schritte:
- Bereitstellen einer Vielzahl von Schichten bestehend aus einem Gewebe und einem Vliesstoff, die auf eine abwechselnde Weise angeordnet sind, und wobei wenigstens eine der Außenschichten aus Vliesstoff besteht, in einem Formwerkzeug, wobei das Gewebe zuvor bei einer Temperatur von 160 bis 220 °C für eine Zeit von 1 bis 10 Minuten, vorzugsweise bei einer Temperatur von 180 bis 200 °C für eine Zeit von 2 bis 5 Minuten, wärmegehärtet worden ist,
- Bereitstellen einer Matrix, die ein duroplastisches Harz umfasst, in dem Formwerkzeug,
- Vernetzen des Harzes,
- Lösen des Laminats aus dem Formwerkzeug.

13. Verfahren zur Herstellung eines mehrschichtigen Laminats nach dem vorstehenden Anspruch, wobei Wärmehärten des Gewebes durch Anlegen einer Zugspannung von 10 bis 20 kg/mm², vorzugsweise von 12 bis 16 kg/mm², an das Gewebe ausgeführt worden ist.

14. Verfahren zur Herstellung eines mehrschichtigen Laminats nach einem oder mehreren der Ansprüche 12 oder 13, wobei das Gewebe gekühlt wird, bis es eine Temperatur von 20 °C unterhalb der Glasübergangstemperatur des thermoplastischen Polymers, aus dem die Fasern des Gewebes bestehen, erreicht hat.

## Revendications

1. Stratifié multicouche pour un usage nautique comprenant :
- au moins une matrice dans une quantité de 40 à 70 % en poids par rapport au poids total de la multicouche, comprenant un polymère thermodurcissable choisi dans le groupe constitué par : les résines polyester insaturé ; les résines époxy ; les résines phénoliques ; les résines alkydes ; un polymère thermoplastique choisi dans le groupe constitué par : le polypropylène isotactique ; le polyamide 6 ; le polyamide 6,6 ; le polyéther-éthercétone ou PEEK ; le polyéther imide ou PEI;
- une pluralité de couches de renforcement, constituées d'un tissu et d'un tissu non tissé disposé de manière alternée et dans lequel au moins l'une des couches externes est composée de tissu non tissé, en une quantité de 30 à 60 % en poids par rapport au poids total de la multicouche, comprenant des fibres de polymère thermoplastique choisies dans le groupe constitué par : le polyéthylène ; le polypropylène isotactique ; le polyamide 6 ; le polyamide 6,6 ; le poly(téréphtalate d'éthylène) ; le polyacrylonitrile ; le poly(alcool vinylique) ;
dans lequel ledit stratifié multicouche présente une rugosité de surface (Rq) mesurée selon la norme ISO 4287 : 1997 de 0,04 à 0,25.

2. Stratifié multicouche selon la revendication 1, dans lequel lesdites couches de tissu et de tissu non tissé sont de 16 à 20 pour chaque cm d'épaisseur et dans lequel les couches de tissu non tissé ne dépassent pas 5 couches/cm.

3. Stratifié multicouche selon une ou plusieurs des revendications précédentes, dans lequel la rugosité de surface (Rq) calculée selon la norme ISO 4287 : 1997 est de préférence de 0,08 à 0,18.

4. Stratifié multicouche selon une ou plusieurs des revendications précédentes, dans lequel ladite matrice est de préférence choisie parmi les résines de polyester insaturé et les résines époxy.

5. Stratifié multicouche selon une ou plusieurs des revendications précédentes, dans lequel ladite couche de renforcement est de préférence choisie parmi des fibres de polyester ou PET et de poly(alcool vinylique) ou PVA.

6. Stratifié multicouche selon une ou plusieurs des revendications précédentes, dans lequel ladite matrice est de préférence présente en une quantité de 45 % à 55 % en poids par rapport au poids total de la multicouche.

7. Stratifié multicouche selon une ou plusieurs des revendications précédentes, dans lequel la couche de renforcement est présente de préférence en une quantité de 45 % à 55 % en poids par rapport au poids total de la multicouche.

8. Stratifié multicouche selon la revendication 1, dans lequel ledit tissu a une conception chaîne/trame du type choisi dans le groupe constitué par : panama ; ajouré ; courbe renforcée ; toile RP ; Batavia 4AV 4IN inversé ; nid d'abeille 8x8 ; armure hollandaise uniquement à la chaîne ; armure hollandaise uniquement à la trame ; sergé brisé à 6 fils de trame.

9. Stratifié multicouche selon une ou plusieurs des revendications précédentes, dans lequel ladite couche de renforcement est composée de fibres recyclées.

10. Stratifié multicouche selon la revendication 1, dans lequel ledit tissu dont est composée la couche de renforcement est thermodurci à une température de 160 à 220 °C pendant une durée de 1 à 10 minutes, de préférence à une température de 180 à 200 °C pendant une durée de 2 à 5 minutes.

11. Stratifié multicouche selon la revendication 1, dans lequel au moins l'une desdites couches extérieures n'a pas de finition fonctionnelle.

12. Procédé de production d'un stratifié multicouche selon la revendication 1, **caractérisé en ce qu'**il comprend les étapes suivantes :
- fourniture dans un moule d'une pluralité de couches constituées d'un tissu et d'un tissu non tissé disposés de manière alternée et dans lequel l'une au moins des couches externes est composée de tissu non tissé, ledit tissu ayant été préalablement thermodurci à une température de 160 à 220 °C pendant une durée de 1 à 10 minutes, de préférence à une température de 180 à 200 °C pendant une durée de 2 à 5 minutes,
- fourniture d'une matrice comprenant une résine thermodurcissable dans ledit moule,
- réticulation de ladite résine,
- libération dudit stratifié du moule.

13. Procédé de production d'un stratifié multicouche selon la revendication précédente, dans lequel le thermodurcissement dudit tissu a été réalisé en appliquant au tissu une contrainte de traction de 10 à 20 kg/mm², de préférence de 12 à 16 kg/mm².

14. Procédé de production d'un stratifié multicouche selon une ou plusieurs des revendications 12 ou 13, dans lequel ledit tissu est refroidi jusqu'à ce qu'il atteigne une température de 20 °C en dessous de la température de transition vitreuse du polymère thermoplastique dont sont composées les fibres du tissu.
